# EUROPEAN PATENT APPLICATION

(11) **EP 4 361 690 A1**
(43) Date of publication of application: **01.05.2024**
(21) Application number: 22866302.7
(22) Date of filing: 05.08.2022
(51) Int. Cl.: G02B 6/38

(54) **OPTICAL FIBER CONNECTOR, AND PREPARATION METHOD FOR OPTICAL FIBER FERRULE**

(30) Priority: 07.09.2021 CN 202111046857
(71) Applicant: Huawei Technologies Co., Ltd., Shenzhen, Guangdong 518129 (CN); Jinan University, Tianhe District Guangzhou Guangdong 510632 (CN)
(72) Inventor: DING, Wei, Guangzhou, Guangdong 510632 (CN); ZHANG, Zhe, Guangzhou, Guangdong 510632 (CN); WANG, Yingying, Guangzhou, Guangdong 510632 (CN); ZHOU, Rui, Shenzhen, Guangdong 518129 (CN); TONG, Zhaoyang, Shenzhen, Guangdong 518129 (CN)
(74) Representative: Thun, Clemens
(86) International application number: PCT/CN2022/110421
(87) International publication number: WO 2023/035828

(57) **Abstract**

A fiber connecting apparatus and a fiber ferrule preparation method are provided. The connecting apparatus includes a first fiber connector, a second fiber connector, and a pair of adapters. The first fiber connector includes a first fiber ferrule having a central axis through-hole structure, and a first fiber is capable of passing through the first fiber ferrule. The second fiber connector includes a second fiber ferrule having a central axis through-hole structure, and a second fiber is capable of passing through the second fiber ferrule. Two adapters in the pair of adapters are configured to implement docking between the first fiber and the second fiber inside the pair of adapters. A head of the first fiber ferrule includes a first fiber limiting structure, and the first fiber limiting structure is configured to fasten a head of the first fiber in the first fiber ferrule; and/or a head of the second fiber ferrule includes a second fiber limiting structure, and the second fiber limiting structure is configured to fasten a head of the second fiber in the second fiber ferrule. This reduces a fiber docking loss and improves coupling efficiency.

## Description

This application claims priority to Chinese Patent Application No. 202111046857.3, filed with the China National Intellectual Property Administration on September 7, 2021 and entitled "FIBER CONNECTING APPARATUS AND FIBER FERRULE PREPARATION METHOD", which is incorporated herein by reference in its entirety.

### TECHNICAL FIELD

This application relates to the field of fiber assemblies, and more specifically, to a fiber connecting apparatus and a fiber ferrule preparation method.

### BACKGROUND

A hollow-core fiber is a waveguide with a fiber core filled with air, cladding arranged with microstructures, and a cross section extending longitudinally for long-distance flexible light transmission in an air medium (also referred to as a hollow-core microstructure fiber or a hollow-core photonic crystal fiber). Currently, there are mainly two light guide types of hollow-core fibers: photonic bandgap hollow-core fibers and anti-resonant hollow-core fibers. A difference from a total internal reflection light guide mechanism of conventional solid-core fibers is that the photonic bandgap hollow-core fibers are based on photonic bandgap effect, and the anti-resonant hollow-core fibers are based on anti-resonant reflection effect. In comparison with conventional fibers, the hollow-core fibers have the following characteristics: low latency, a high damage threshold, weak nonlinearity, low chromatic dispersion, a potential ultra-low loss, and the like, and have an important application prospect in aspects of fiber communication, interaction between light and gas or liquid, fiber sensing, high-power laser transmission, pulse compression, and the like.

Currently, connection technologies for the hollow-core fibers mainly include: a hot fusion splicing technology, a fiber array docking technology, a fiber connector technology, and the like. However, these technologies may damage microstructures of the hollow-core fibers, or the hollow-core fibers cannot be repeatedly plugged or unplugged for use, or an adjustment degree of freedom for improving alignment efficiency lacks, or an expensive fusion splicing/connection device is needed. Due to these disadvantages, an insertion loss of a hollow-core fiber connecting apparatus in actual use is large, the hollow-core fiber connecting apparatus cannot be plug-and-play, and costs cannot be reduced.

### SUMMARY

This application provides a fiber connecting apparatus and a fiber ferrule preparation method, and proposes a fiber connector preparation technology based on a ferrule with a limiting structure on a head and a multi-keyway fiber connecting apparatus capable of adjusting an angle in a circumferential direction through rotation, so that a fiber facet is not contaminated or damaged in a connector preparation process, and a lateral offset of two docked fibers is controlled at a low level. In this way, a hollow-core fiber is connected to another hollow-core fiber or another solid-core fiber in a low-loss, pluggable, and low-cost manner.

According to a first aspect, a fiber connecting apparatus is provided. The fiber connecting apparatus includes: a first fiber connector, a second fiber connector, and a pair of adapters. The first fiber connector includes a first fiber ferrule having a central axis through-hole structure, and a first fiber is capable of passing through the first fiber ferrule. The second fiber connector includes a second fiber ferrule having a central axis through-hole structure, and a second fiber is capable of passing through the second fiber ferrule. The pair of adapters is formed by connecting and fastening a first adapter and a second adapter opposite to each other, and the two adapters in the pair of adapters are configured to plug and unplug the first fiber connector and the second fiber connector, to implement docking between the first fiber and the second fiber inside the pair of adapters. A head of the first fiber ferrule includes a first fiber limiting structure, and the first fiber limiting structure is configured to fasten a head of the first fiber in the first fiber ferrule; and/or a head of the second fiber ferrule includes a second fiber limiting structure, and the second fiber limiting structure is configured to fasten a head of the second fiber in the second fiber ferrule.

In this application, the first fiber connector may use the solution provided in this application, and the second fiber connector may use a connector in the conventional technology, or both the first connector and the second connector use the solution provided in this application. This is not limited herein.

Based on the foregoing technical solution, the fiber connecting apparatus provided in this application may fasten the heads of the fibers, to reduce a connection loss (also referred to as an insertion loss) during docking of the fibers.

With reference to the first aspect, in some implementations of the first aspect, the first fiber limiting structure and/or the second fiber limiting structure are/is a groove structure on the head of the fiber ferrule in a central axis direction, and the groove structure is configured to accommodate a material having a bonding attribute, to fasten the head of the fiber in the fiber ferrule.

Based on the foregoing technical solution, the limiting structure in this application may be that the head of the fiber ferrule is of a groove structure. The groove structure may accommodate the material having the bonding attribute, to fasten the head of the fiber in the ferrule. This reduces the connection loss during docking of the fibers.

With reference to the first aspect, in some implementations of the first aspect, a first key is disposed on the first fiber connector, a first component configured to fasten the first fiber connector is disposed on the first adapter in the pair of adapters, at least two first keyways are provided on a side wall of the first component, the first key is able to be embedded into each of the at least two first keyways, and the at least two first keyways are distributed in a circumferential direction of the first component; and/or a second key is disposed on the second fiber connector, a second component configured to fasten the second fiber connector is disposed on the second adapter in the pair of adapters, at least two second keyways are provided on a side wall of the second component, the second key is able to be embedded into each of the at least two second keyways, and the at least two second keyways are distributed in a circumferential direction of the second component.

Based on the foregoing technical solution, according to the fiber connecting apparatus provided in this application, the connection loss during docking of the fibers can be reduced by using a method of fastening the heads of the fibers and switching keyways, so that coupling efficiency of hollow-core fibers can be significantly improved. In addition, the adapters can implement a repeatedly pluggable connection between the fibers without a complex process and device, thereby reducing manufacturing costs and improving operation efficiency.

With reference to the first aspect, in some implementations of the first aspect, the first adapter and the second adapter in the pair of adapters are connected together by using flanges on respective outer edges of the first adapter and the second adapter.

Based on the foregoing technical solution, the adapters in this application may be connected together by using the flanges, and may be disassembled and refastened.

With reference to the first aspect, in some implementations of the first aspect, the fiber in the fiber connector includes a microstructure fiber.

The "microstructure fiber" in this application may be various fibers whose cladding includes air holes, and a fiber core of the microstructure fiber may be solid or filled with air, for example, a hollow-core microstructure fiber (also referred to as a hollow-core fiber) or a solid-core microstructure fiber.

Based on the foregoing technical solution, in this application, a connection between microstructure fibers (for example, hollow-core fibers) can be implemented, a connection loss during docking of the microstructure fibers is reduced, and coupling efficiency is improved.

With reference to the first aspect, in some implementations of the first aspect, when the fiber in the fiber ferrule is an all-solid fiber, a ferrule-side facet of the all-solid fiber may be polished and plated with an anti-reflection film.

The "all-solid fiber" in this application may be a fiber whose cladding and fiber core are both solid, for example, a solid-core quartz fiber.

Based on the foregoing technical solution, in this application, the ferrule-side facet of the all-solid fiber is polished and plated with the anti-reflection film, so that reflection of an interface between a hollow-core fiber and the all-solid fiber can be further reduced, and coupling efficiency of fiber docking can be improved.

According to a second aspect, a fiber ferrule preparation method is provided. The method includes: obtaining a ferrule with a groove structure on a head; threading a fiber into the ferrule; cutting a facet of the fiber that is threaded out of the ferrule flat; coating a side surface of the fiber that is threaded out of the ferrule with a material having a bonding attribute; and accommodating, by the groove structure, the material having the bonding attribute, and fastening a head of the fiber in a fiber ferrule after bonding and curing.

Based on the foregoing technical solution, the fiber ferrule prepared in this application can stably fasten the head of the fiber, thereby reducing a connection loss. In addition, in comparison with the conventional technology in which a fiber facet of a ceramic ferrule needs to be polished to remove glue, in the technical solution provided in this application, a facet on a head of a hollow-core fiber is not damaged or contaminated, and glue removal does not need to be performed. That is, a microstructure of the hollow-core fiber is not damaged, and the connection loss is reduced.

With reference to the second aspect, in some implementations of the second aspect, the method further includes: leveling the facet on the head of the fiber and an outer edge facet on the head of the ferrule, to enable the groove structure to accommodate the material having the bonding attribute.

Based on the foregoing technical solution, in this application, the material having the bonding attribute may fall into the groove structure along the side surface of the fiber by pulling (or pushing) the fiber, to fasten the head of the fiber and reduce the connection loss.

With reference to the second aspect, in some implementations of the second aspect, the fiber includes a microstructure fiber.

With reference to the second aspect, in some implementations of the second aspect, when the fiber is an all-solid fiber, the method further includes: polishing a ferrule-side facet of the all-solid fiber and plating the ferrule-side facet of the all-solid fiber with an anti-reflection film.

According to a third aspect, a fiber connecting apparatus is provided. The fiber connecting apparatus includes: a first fiber ferrule, a second fiber ferrule, and a ferrule matching sleeve. A first fiber is packaged in the first fiber ferrule, and a second fiber is packaged in the second fiber ferrule. The ferrule matching sleeve is configured to connect and hold the first fiber ferrule and the second fiber ferrule tight, to dock the first fiber and the second fiber. The first fiber ferrule and the second fiber ferrule are capable of rotating in the ferrule matching sleeve by any angle in a circumferential direction. A head of the first fiber ferrule includes a first fiber limiting structure, and the first fiber limiting structure is configured to fasten a head of the first fiber in the first fiber ferrule; and/or a head of the second fiber ferrule includes a second fiber limiting structure, and the second fiber limiting structure is configured to fasten a head of the second fiber in the second fiber ferrule.

Based on the foregoing technical solution, in the fiber connecting apparatus (which may be referred to as a circumferentially full-angle adjustable fiber connecting apparatus) provided in this application, the fiber connectors and the pair of multi-keyway adapters are removed, and only the fiber ferrules in the fiber connectors and the ferrule matching sleeve in the pair of multi-keyway adapters are reserved. In this way, rotation adjustment of the fiber connectors is no longer limited by a quantity of keyways on the pair of adapters, and circumferential full-angle rotation adjustment can be performed on two connected fibers. Therefore, a lateral offset between the two connected fibers can be further reduced. In addition, the heads of the fibers are fastened, so that a connection loss can be reduced, and coupling efficiency of fiber docking can be improved. In addition, the fiber connecting apparatus greatly reduces a size and a weight of the connecting apparatus.

With reference to the third aspect, in some implementations of the third aspect, the first fiber limiting structure and/or the second fiber limiting structure are/is a groove structure in a central axis direction, and the groove structure is used to accommodate a material having a bonding attribute, to fasten the head of the fiber in the fiber ferrule.

Based on the foregoing technical solution, for the circumferentially full-angle adjustable fiber connecting apparatus provided in this application, the head groove structure may be designed, to accommodate the material having the bonding attribute, so that the head of the fiber is fastened in the fiber ferrule, and the connection loss is reduced.

With reference to the third aspect, in some implementations of the third aspect, the fiber in the fiber ferrule includes a microstructure fiber.

Based on the foregoing technical solution, the circumferentially full-angle adjustable fiber connecting apparatus provided in this application can implement docking between microstructure fibers, reduce a connection loss during docking of the microstructure fibers, and improve coupling efficiency.

With reference to the third aspect, in some implementations of the third aspect, when the fiber in the fiber ferrule is an all-solid fiber, a ferrule-side facet of the all-solid fiber may be polished and plated with an anti-reflection film.

Based on the foregoing technical solution, in the circumferentially full-angle adjustable fiber connecting apparatus provided in this application, the ferrule-side facet of the all-solid fiber is polished and plated with the anti-reflection film, so that reflection of an interface between a hollow-core fiber and the all-solid fiber can be further reduced, and coupling efficiency of fiber docking can be improved.

### BRIEF DESCRIPTION OF DRAWINGS

FIG. 1 is a schematic diagram of a head groove-type fiber ferrule according to this application;
FIG. 2 is a schematic diagram of a fiber ferrule preparation method according to this application;
FIG. 3 is a schematic diagram of a fiber ferrule preparation process according to this application;
FIG. 4 is a structure of a pair of multi-keyway fiber adapters and a structure of a fiber connecting apparatus according to this application;
FIG. 5 is a schematic diagram of a method for connecting fiber connectors to a pair of adapters according to this application;
FIG. 6 is a physical diagram of a connection state of fiber connectors and a pair of adapters according to this application;
FIG. 7 is a scanning electron microscope diagram of a physical hollow-core fiber used in this application;
FIG. 8 is micrographs of a hollow-core fiber ceramic ferrule preparation process;
FIG. 9 is a measured result of docking between hollow-core fibers;
FIG. 10 is a photo of a solid-core single mode fiber after being fusion spliced with a graded-index multimode fiber;
FIG. 11 is micrographs of a facet of a prepared hollow-core fiber ceramic ferrule;
FIG. 12 is micrographs of a preparation process and a facet of a ceramic ferrule in which a solid-core single mode fiber is fusion spliced with a graded-index multimode fiber;
FIG. 13 is a mode field imaging diagram of a solid-core single mode fiber before and after mode field expansion and a hollow-core fiber;
FIG. 14 is a back reflection spectrum before and after an anti-reflection film is plated on a solid-core fiber; and
FIG. 15 is a photo of a circumferentially full-angle adjustable fiber connecting apparatus according to this application.

### DESCRIPTION OF EMBODIMENTS

The following describes technical solutions of this application with reference to accompanying drawings.

Before the technical solutions of this application are described, basic devices used for connection between fibers are first briefly described.

Fiber connectors are generally connected by using a pair of adapters (a pair of adapters). Two adapters may be connected together by using flanges on respective outer edges of the adapters to form a pair of adapters. The fiber connector includes a fiber ferrule having a central axis (central axis) through-hole structure, and a fiber is capable of passing through the fiber ferrule. A ferrule matching sleeve is disposed inside the pair of adapters, and the fiber ferrules may be respectively plugged into the two adapters in the pair of adapters, that is, docking of the fibers is implemented inside the pair of adapters. Generally, the ferrule in the fiber connector is a ceramic ferrule.

An insertion loss of the fiber connector is an optical power loss caused by the fiber connector to a connected fiber link through the pair of adapters, and the loss is mainly caused by geometric decentration, mismatch of optical mode fields, and reflection on interfaces of different fiber materials between two connected fibers. When mode fields of fibers match, if two docked fibers are arranged in a straight line, that is, a lateral offset and a tilt angle of the two docked fibers are zero, in this case, an insertion loss is the minimum. However, during actual application, when two fiber connectors are connected to each other, a lateral offset and a slight-angle tilt inevitably exist between the two fiber connectors. This is mainly caused because an inner diameter of a through hole of the fiber ferrule is slightly greater than an outer diameter of the fiber, and the fiber is not completely coaxial with the ceramic ferrule.

The following first describes a fiber connecting apparatus and a fiber ferrule preparation method in this application.

It should be noted that the technical solutions of this application are applicable to various types of fibers in the conventional technology, and certainly are also applicable to a "microstructure fiber". The "microstructure fiber" in this application may be various fibers whose cladding includes air holes, and a fiber core of the microstructure fiber may be solid or air, for example, a hollow-core microstructure fiber (also referred to as a hollow-core fiber) or a solid-core microstructure fiber. The "all-solid fiber" in this application may be a fiber whose cladding and fiber core are both solid, for example, a solid-core quartz fiber.

In the following embodiments of this application, an example in which a fiber ferrule is a ceramic ferrule (ceramic ferrule) is used for description. For another type of fiber ferrule, for example, a glass ferrule or a metal ferrule, a structure and a preparation method thereof are similar, and all fall within the protection scope of this application.

In the following embodiments of this application, an example in which the fiber is a "hollow-core fiber" is used for description. For another type of fiber, the technical solutions of this application are also applicable, and all fall within the protection scope of this application.

The "hollow-core fiber" mentioned in embodiments may be various types of hollow-core fibers, for example, a photonic bandgap hollow-core fiber and an anti-resonant hollow-core fiber. This is not limited.

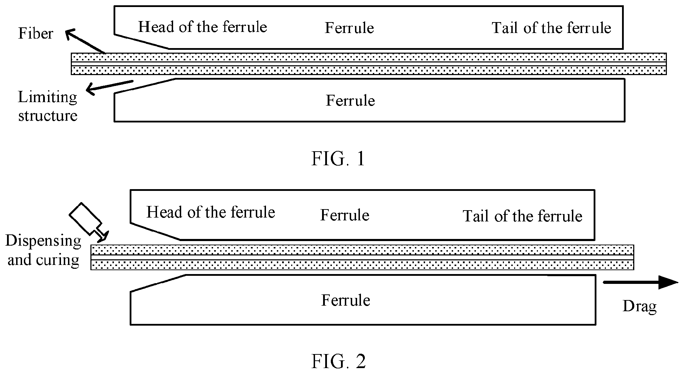

A head of the fiber ferrule provided in this application includes a limiting structure, and the limiting structure is configured to fasten a head of the fiber in the fiber ferrule. In an example, FIG. 1 is a schematic diagram of a fiber ceramic ferrule according to this application. In this example, the fiber limiting structure is a groove structure on the head of the fiber ferrule in a central axis direction. The groove structure may be configured to accommodate a material having a bonding attribute (for example, glue or ultraviolet curing glue), to fasten the head of the fiber in the fiber ferrule. Optionally, a tail of the ceramic ferrule may also have a groove, to thread the hollow-core fiber into the ceramic ferrule.

FIG. 2 is a schematic diagram of a hollow-core fiber ceramic ferrule preparation method according to this application. In an example, in this application, a groove is provided on a head of the ceramic ferrule. First, a hollow-core fiber may be inserted from a tail of the ceramic ferrule and threaded out of the head, then a facet on a head of the hollow-core fiber that is threaded out of the ceramic ferrule is cut flat, a side surface of the hollow-core fiber is coated with a material having a bonding attribute (for example, ultraviolet curing glue), and the facet on the head of the fiber and an outer edge facet on the head of the ceramic ferrule are leveled (for example, the hollow-core fiber may be dragged backward from the tail of the ceramic ferrule). Therefore, a groove structure accommodates the material having the bonding attribute (for example, the ultraviolet curing glue may enter the groove along the side surface of the hollow-core fiber that is dragged backward (or pushed forward)), and the hollow-core fiber is fastened in the ceramic ferrule after bonding and curing (for example, the glue is cured by using ultraviolet light). In this embodiment of this application, an amount of the ultraviolet curing glue may be controlled in this process, to prevent the glue from overflowing the groove, and the facet of the hollow-core fiber is not contaminated. That is, a microstructure of the hollow-core fiber is not damaged, and a connection loss is reduced.

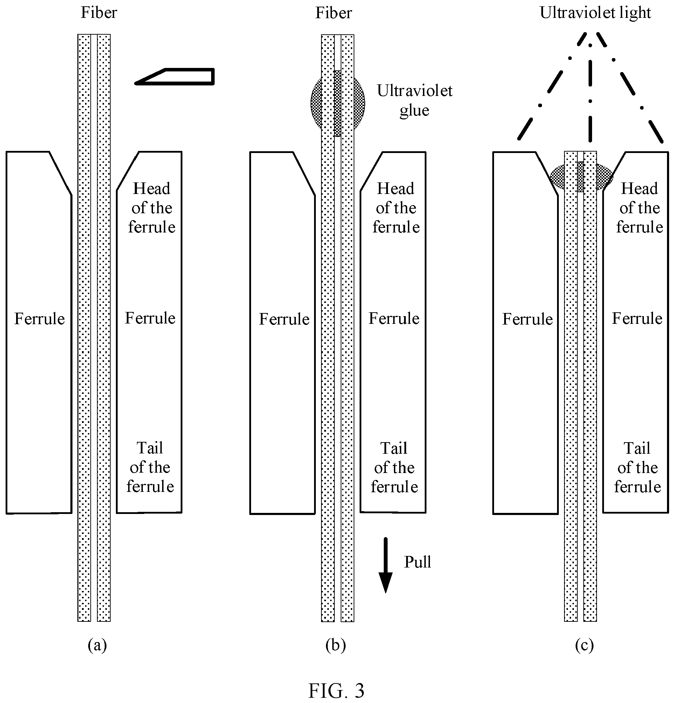

Specifically, a hollow-core fiber ceramic ferrule preparation process is shown in FIG. 3. In an example, first, a ceramic ferrule with a groove on a head is selected or prepared, and a hollow-core fiber is threaded from a tail of the ceramic ferrule and is threaded out of the head of the ceramic ferrule. Then, a facet of the hollow-core fiber that is threaded out of the ceramic ferrule is cut flat, as shown in (a) in FIG. 3. A small amount of ultraviolet curing glue is applied to a side surface of the hollow-core fiber, and then the hollow-core fiber is dragged from the tail of the ceramic ferrule, to suck the glue into the groove on the head of the ceramic ferrule, as shown in (b) in FIG. 3. Finally, when the facet of the hollow-core fiber is flush with a facet on the head of the ceramic ferrule, the glue is cured by using ultraviolet light, and the hollow-core fiber is fastened in the ceramic ferrule, as shown in (c) in FIG. 3. A hollow-core fiber ceramic ferrule prepared according to the method can stably fasten a head of the hollow-core fiber. In addition, in comparison with the conventional technology in which a fiber facet of a ceramic ferrule needs to be polished to remove glue, in the technical solution provided in this application, a facet on a head of a hollow-core fiber is not damaged or contaminated, and glue removal does not need to be performed. That is, a microstructure of the hollow-core fiber is not damaged, and the connection loss is reduced.

In a pair of fiber adapters (for example, a pair of adapters includes an adapter #A and an adapter #B) provided in this application, a first component configured to fasten a fiber connector is disposed on each adapter, at least two first keyways are provided on a side wall of the first component, and the at least two first keyways are distributed in a circumferential direction of the first component. In this application, a first key is disposed on the fiber connector, and the first key is able to be embedded into each of the at least two first keyways.

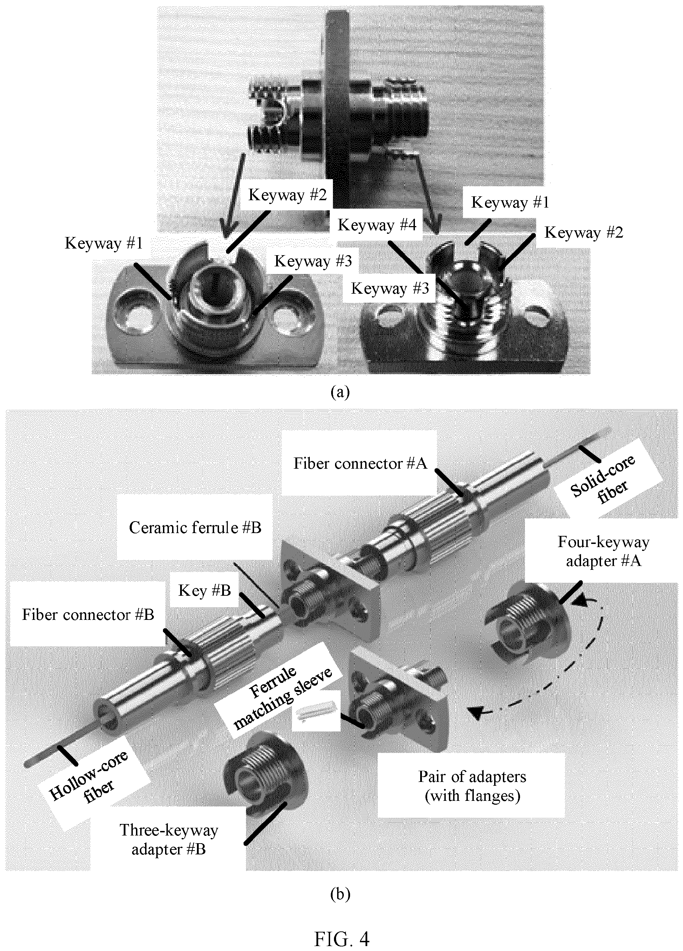

In an example, FIG. 4 is a schematic diagram of a structure of a pair of multi-keyway adapters and a structure of a fiber connecting apparatus according to this application. As shown in (a) in FIG. 4, a left adapter and a right adapter in the pair of adapters in this embodiment respectively have m keyways and n keyways (m and n are integers greater than 1, and m and n may be equal or not equal to each other). Therefore, fiber connectors (fiber connectors) on the left and right sides may be rotated by m and n positions respectively, a lateral offset between docked fibers can be reduced through rotation, and then coupling efficiency of the fibers is improved. (b) in FIG. 4 is a schematic diagram of a structure of a fiber connecting apparatus according to this application. As shown in (b) in FIG. 4, a fiber connector #B includes a fiber ceramic ferrule #B having a central axis (central axis) through-hole structure, a hollow-core fiber is capable of passing through the fiber ceramic ferrule, and a key #B is disposed on the fiber connector #B. Correspondingly, a structure of a fiber connector #A is similar to that of the fiber connector #B. Details are not described again. Each ceramic ferrule may be plugged into a ferrule matching sleeve in each adapter, and two adapters in the pair of adapters are configured to plug and unplug the two fiber connectors, to implement docking between the hollow-core fiber and a solid-core fiber inside the pair of adapters. In this application, the adapters on the left and right sides of the pair of adapters may be further connected together by using flanges on respective outer edges of the adapters. As described above, according to the method in this embodiment, a repeatedly pluggable connection between fibers may be further implemented.

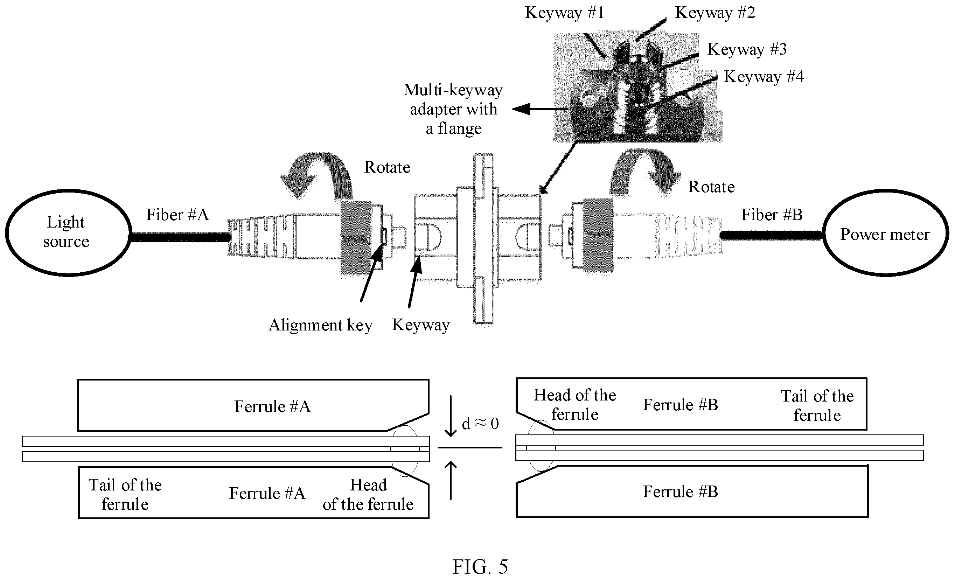

This application further provides a connection method for reducing a lateral offset of fibers. As shown in FIG. 5, after hollow-core fiber connectors and a pair of multi-keyway fiber adapters are prepared, tails of two to-be-docked fiber connectors are respectively connected to a light source and an optical power meter, and then the two fiber connectors are plugged into different keyways of the pair of fiber adapters. The optical power meter is used to measure an output optical power when the fiber connectors are connected to different keyways. When the optical power is the highest, the two fiber connectors can be fastened to the pair of adapters.

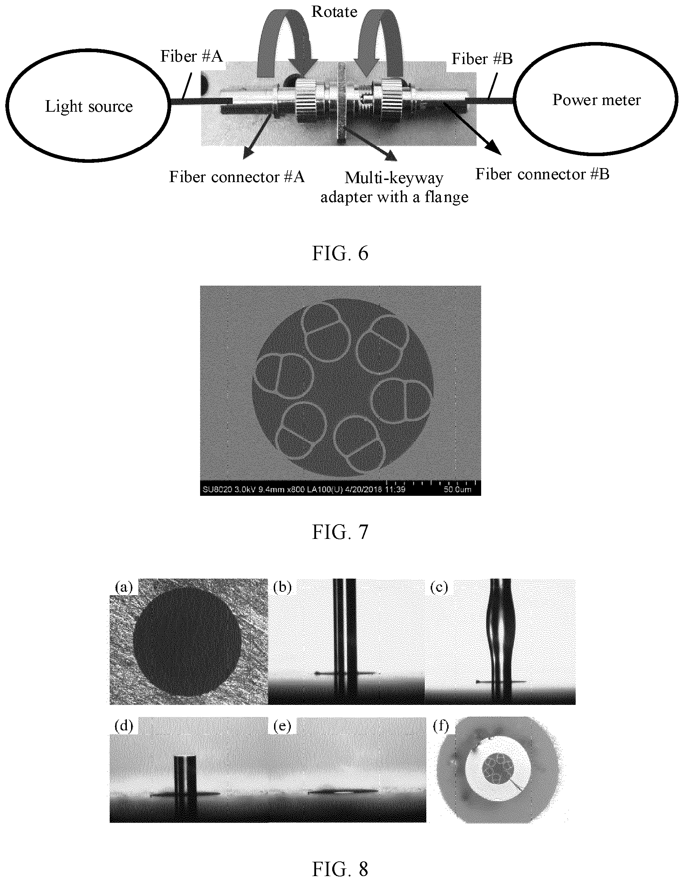

In an example, as shown in FIG. 6, a tail of a fiber #A is connected to the light source, and a tail of a fiber #B is connected to the optical power meter. A keyway on the left of the pair of adapters is first randomly selected, and a connector of the fiber #A is plugged into the keyway and fastened by using a nut. Then, a connector of the fiber #B is separately plugged into different keyways on the right side of the pair of adapters, and an optical power value when the connector is plugged into each keyway is recorded. Then, the connector of the fiber #A is fastened in another keyway, and the connector of the fiber #B is separately plugged into different keyways on the right side of the pair of adapters again. An optical power value when the connector is plugged into each keyway is recorded. Finally, a left keyway position and a right keyway position when the optical power value is the maximum are selected, and the two fiber connectors are finally fastened, to implement docking of the fibers.

It is assumed that distances that fiber cores of the two fiber connectors prepared in this embodiment deviate from central axes of the ceramic ferrules are d and d' respectively. In this case, during docking, a possible maximum lateral dislocation distance is d + d', and the dislocation distance may be greatly reduced by using the foregoing rotation and keyway switching methods. A possible minimum lateral dislocation distance is |d - d'|. Greater quantities of adapter keyways on the left and right sides (that is, m and n are greater) indicate that it is more likely to reduce the lateral offset of the fibers in the fiber connecting apparatus to a minimum value, that is, the efficiency of fiber docking is higher. In the conventional technology, there is only one keyway on each of two sides of a pair of fiber adapters. Therefore, a lateral offset (0 to 2d) of fibers in a fiber connecting apparatus occurs randomly and cannot be adjusted. According to the hollow-core fiber connectors, the pair of multi-keyway adapters, and the method for connecting the hollow-core fiber connectors to the pair of multi-keyway adapters that are provided in this application, problems of preparation of the hollow-core fiber connecting apparatus and adjustment of a lateral offset in a process of docking fibers can be resolved, and coupling efficiency of the hollow-core fibers can be significantly improved. In addition, the method for connecting the hollow-core fibers provided in this application is convenient and time-consuming, and can further implement repeated plugging and unplugging without a complex process and device, thereby reducing manufacturing costs and improving operation efficiency.

The foregoing technical solution may be applicable to docking between the hollow-core fibers, and is also applicable to connection between solid-core quartz fibers (single mode, multimode, and large-mode field) and connection between fibers of different materials (for example, sapphire fibers, soft glass fibers, and plastic fibers).

In an example, the technical solution of this application may be applied to docking between hollow-core fibers. Specifically, in this embodiment, a hollow-core anti-resonant fiber with an outer diameter of 210 µm is selected, and a structure of a facet of the hollow-core anti-resonant fiber is shown in FIG. 7. A batch of fiber ceramic ferrules with a hole diameter of about 220 µm may be purchased. Because a tail of the ceramic ferrule originally has a groove (which may also be understood as being "funnel-shaped"), for convenience, the ceramic ferrule may be used upside down, that is, equivalent to a ceramic ferrule with a groove on a head. First, the hollow-core fiber is inserted into the inverted ceramic ferrule, then a facet of the hollow-core fiber that is threaded out of the ceramic ferrule is cut flat, and then the ceramic ferrule is fastened. Two charge coupled device (charge coupled device, CCD) cameras are used to observe a facet and a side surface of the ceramic ferrule in real time under an optical microscope. For example, the facet and the side surface of the ceramic ferrule in this case are shown in (a) and (b) in FIG. 8. Then, a small amount of ultraviolet curing glue is stuck on a side surface of the hollow-core fiber that is threaded out of the ceramic ferrule, as shown in (c) in FIG. 8. Then, the fiber is dragged downwards by using a precision displacement platform, so that the glue flows into the groove of the ceramic ferrule along the side surface of the hollow-core fiber. The hollow-core fiber is continuously dragged until the facet of the hollow-core fiber is flush with an outer edge facet of the ceramic ferrule. This process is shown in (d) and (e) in FIG. 8. Then, the ultraviolet curing glue is cured by using ultraviolet light. In this case, the hollow-core fiber is fastened in the ceramic ferrule, and a facet of the fastened hollow-core fiber ceramic ferrule is shown in (f) in FIG. 8. Finally, the hollow-core fiber ceramic ferrule is assembled into a fiber connector. After preparation of hollow-core fiber connectors is completed, two hollow-core fiber connectors are docked by using a pair of multi-keyway adapters. For example, the two hollow-core fiber connectors to be docked may be respectively plugged into different keyways on two sides of the pair of adapters, and an optical power when the hollow-core fiber connectors are plugged into the different keyways of adapters is measured and recorded. When the optical power reaches the highest, the connectors are fastened to the pair of adapters by using nuts.

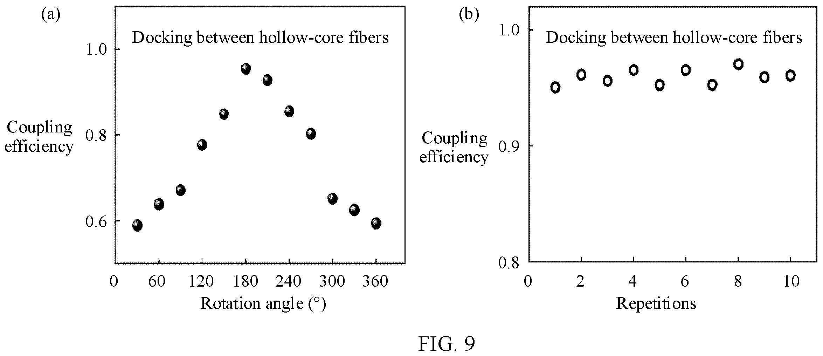

(a) in FIG. 9 is an experimental result that is of the docking between the hollow-core fibers and that is obtained by using the foregoing method. It may be learned that a lateral offset (loss) between two connected hollow-core fibers may be reduced by selecting proper keyway positions. The highest coupling efficiency experimentally obtained between the hollow-core fibers is 97%, that is, the connection loss is 0.13 dB. As described above, the technical solution provided in this application may further implement repeated plugging and unplugging. (b) in FIG. 9 shows an experimental result of 10 times of repeated plugging and unplugging of the hollow-core fiber connectors. It may be learned that, after the connectors are plugged and unplugged for a plurality of times, the coupling efficiency between the hollow-core fibers can still remain at least 95%.

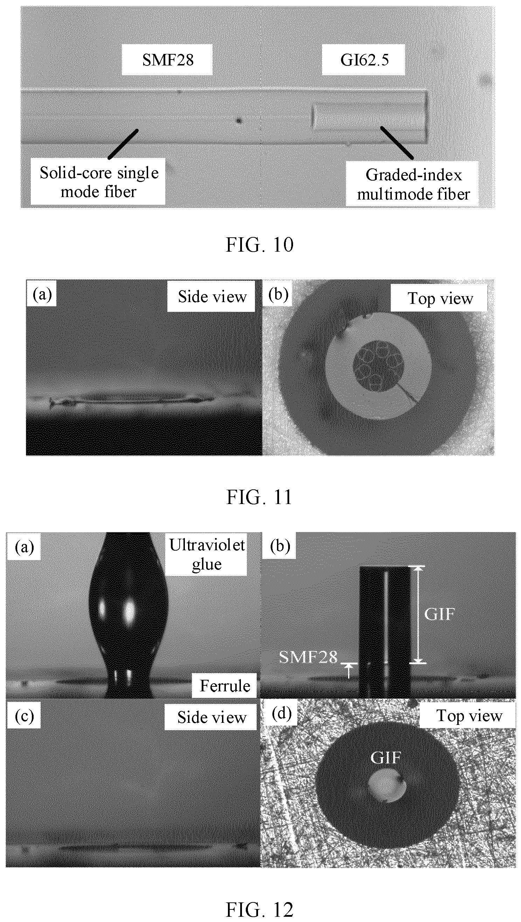

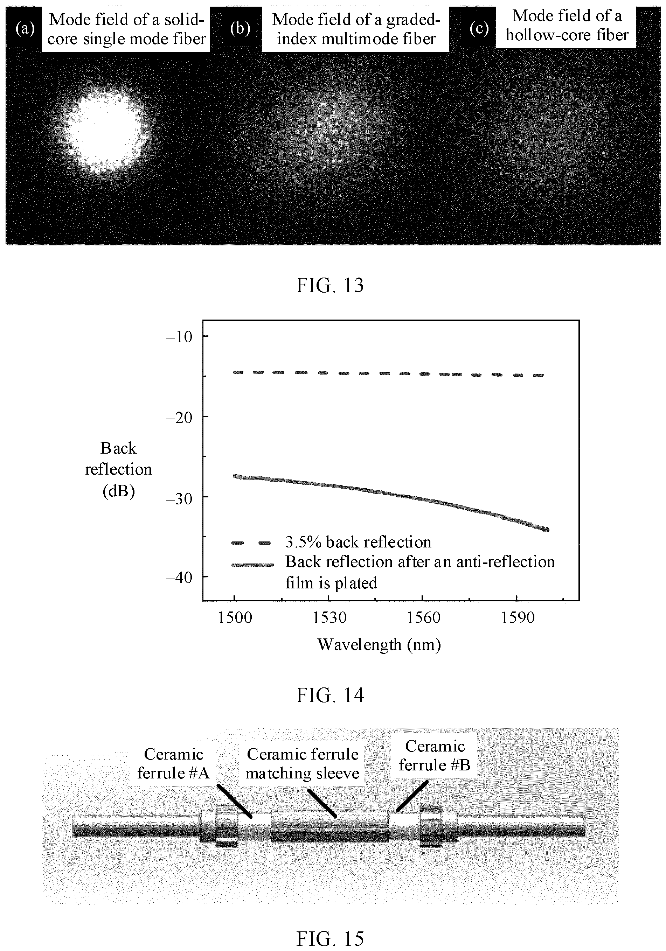

In another example, the technical solution of this application may be applied to docking between a hollow-core fiber and a solid-core single mode fiber (single mode fiber, SMF). Specifically, the hollow-core anti-resonant fiber shown in FIG. 7 may continue to be used as the hollow-core fiber, and SMF-28 may be used as the solid-core single mode fiber. A mode field diameter of the hollow-core fiber at a wavelength of 1550 nm is about 20 µm; and a mode field diameter of the SMF-28 at a wavelength of 1550 nm is about 10 µm. A coupling loss introduced by a mismatch of the mode field diameters alone is about 2 dB. Therefore, it is necessary to first shape mode fields of the fibers and match the mode field diameters of the fibers to reduce the connection loss. In this embodiment, as shown in FIG. 10, a piece of graded-index multimode fiber (graded index fiber, GIF) (for example, GI62.5/125) may be fusion spliced at a tail end of the SMF-28, and multimode interference effect in the GIF is used to expand a mode field emitted by the SMF-28. A length (for example, 267 µm) of the GIF is precisely cut and controlled, so that a mode field diameter of light emitted from the SMF-28 can be expanded to be equivalent to the mode field of the used hollow-core fiber, as shown in FIG. 13. FIG. 11 is micrographs of a prepared hollow-core fiber ceramic ferrule. (a) in FIG. 11 is a side view of the prepared hollow-core fiber ceramic ferrule, and (b) in FIG. 11 is a top view of the prepared hollow-core fiber ceramic ferrule. FIG. 12 is micrographs of a solid-core SMF-28 ceramic ferrule preparation process. (a) in FIG. 12 shows that a small amount of ultraviolet curing glue is stuck on a side surface of a fiber that is threaded out of the ceramic ferrule. (b) FIG. 12 is a side view of the ceramic ferrule when the fiber is dragged downward. (c) and (d) in FIG. 12 are a side view and a facet view of the prepared SMF-28 ceramic ferrule fusion spliced with a short piece of GIF. (a) in FIG. 13 is a mode field diagram before mode field shaping is performed on the solid-core SMF-28. (b) in FIG. 13 is a mode field diagram after mode field shaping performed by connecting a piece of GIF with a length of 267 µm to the solid-core SMF-28. (c) in FIG. 13 is a mode field diagram of the hollow-core fiber at the wavelength of 1550 nm. It may be learned that a size of the mode field of the solid-core SMF-28 basically matches that of the hollow-core fiber by using the GIF to perform mode field shaping. After the mode field matching between the hollow-core fiber and the solid-core SMF-28 is completed, the hollow-core fiber and the solid-core SMF-28 are respectively inserted into inverted (for example, head groove structured) ceramic ferrules, and the fibers are packaged inside the ceramic ferrules by using the same method. Then, the prepared fiber ceramic ferrules are respectively assembled into fiber connectors. Finally, the prepared hollow-core/solid-core fiber connector is separately plugged into a keyway on a left side and a right side of a pair of multi-keyway adapters. The fiber connectors are rotated and inserted into different keyways, and an output optical power is measured. When the optical power reaches the highest, the fiber connectors on the two sides are fastened to the pair of multi-keyway adapters.

According to the method provided in this embodiment, coupling efficiency of 83.3% between the hollow-core fiber and the solid-core SMF-28 can be implemented, that is, a connection loss is 0.8 dB.

Further, another "thermal expansion core" method is used to expand a fiber core and the mode field of the SMF-28, and a facet of the thermal expansion core SMF-28 (SMF-28, namely, an example of an all-solid fiber) is polished and plated with an anti-reflection film. Based on the same rotating connection method, a docking loss of 0.4 dB is achieved. The anti-reflection film is plated, so that back-reflection light is greatly suppressed, as shown in FIG. 14.

This application further provides another circumferentially full-angle adjustable fiber connecting apparatus. As shown in FIG. 15, in the fiber connecting apparatus, the fiber connectors and the pair of multi-keyway adapters are removed, and only the fiber ceramic ferrules in the fiber connectors and the ferrule matching sleeve in the pair of multi-keyway adapters are reserved. In this way, rotation adjustment of the fiber connectors is no longer limited by a quantity of keyways on the pair of adapters, and circumferential full-angle rotation adjustment can be performed on two connected fibers. Therefore, a lateral offset between the two connected fibers can be further reduced. In addition, the fiber connecting apparatus greatly reduces a size and a weight of the connecting apparatus.

According to the technical solutions provided in this application, problems that a facet is contaminated and damaged in a process of preparing hollow-core fiber connectors and that a lateral offset cannot be adjusted in a process of docking hollow-core fibers can be resolved. It may be learned from the foregoing embodiments that the technical solutions provided in this application can implement connections between various different types of fibers with a low connection loss. The connecting apparatus obtained after optimization can be continuously adjusted in a circumferential and full-angle manner, and achieves a lower connection loss. In addition, the connecting apparatus has a small size and a light weight. Moreover, the method for connecting the hollow-core fibers provided in this application is convenient and time-consuming, and can further implement repeated plugging and unplugging without a complex process and device, thereby greatly reducing manufacturing costs and improving operation efficiency.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A fiber connecting apparatus, comprising a first fiber connector, a second fiber connector, and a pair of adapters, wherein
the first fiber connector comprises a first fiber ferrule having a central axis through-hole structure, and a first fiber is capable of passing through the first fiber ferrule;
the second fiber connector comprises a second fiber ferrule having a central axis through-hole structure, and a second fiber is capable of passing through the second fiber ferrule; and
the pair of adapters is formed by connecting and fastening a first adapter and a second adapter opposite to each other, and the two adapters in the pair of adapters are configured to plug and unplug the first fiber connector and the second fiber connector, to implement docking between the first fiber and the second fiber inside the pair of adapters, wherein
a head of the first fiber ferrule comprises a first fiber limiting structure, and the first fiber limiting structure is configured to fasten a head of the first fiber in the first fiber ferrule; and/or a head of the second fiber ferrule comprises a second fiber limiting structure, and the second fiber limiting structure is configured to fasten a head of the second fiber in the second fiber ferrule.

2. The fiber connecting apparatus according to claim 1, wherein the first fiber limiting structure and/or the second fiber limiting structure are/is a groove structure on the head of the fiber ferrule in a central axis direction, and the groove structure is configured to accommodate a material having a bonding attribute, to fasten the head of the fiber in the fiber ferrule.

3. The fiber connecting apparatus according to claim 1 or 2, wherein
a first key is disposed on the first fiber connector, a first component configured to fasten the first fiber connector is disposed on the first adapter in the pair of adapters, at least two first keyways are provided on a side wall of the first component, the first key is able to be embedded into each of the at least two first keyways, and the at least two first keyways are distributed in a circumferential direction of the first component; and/or
a second key is disposed on the second fiber connector, a second component configured to fasten the second fiber connector is disposed on the second adapter in the pair of adapters, at least two second keyways are provided on a side wall of the second component, the second key is able to be embedded into each of the at least two second keyways, and the at least two second keyways are distributed in a circumferential direction of the second component.

4. The fiber connecting apparatus according to any one of claims 1 to 3, wherein the first adapter and the second adapter in the pair of adapters are connected together by using flanges on respective outer edges of the first adapter and the second adapter.

5. The fiber connecting apparatus according to any one of claims 1 to 4, wherein the fiber in the fiber connector comprises a microstructure fiber.

6. The fiber connecting apparatus according to any one of claims 1 to 5, wherein when the fiber in the fiber ferrule is an all-solid fiber, a ferrule-side facet of the all-solid fiber is polished and plated with an anti-reflection film.

7. A fiber ferrule preparation method, comprising:
obtaining a ferrule with a groove structure on a head;
threading a fiber into the ferrule;
cutting a facet of the fiber that is threaded out of the ferrule flat;
coating a side surface of the fiber that is threaded out of the ferrule with a material having a bonding attribute; and
accommodating, by the groove structure, the material having the bonding attribute, and fastening a head of the fiber in a fiber ferrule after bonding and curing.

8. The method according to claim 7, wherein the method further comprises:
leveling the facet on the head of the fiber and an outer edge facet on the head of the ferrule, to enable the groove structure to accommodate the material having the bonding attribute.

9. The method according to claim 7 or 8, wherein the fiber comprises a microstructure fiber.

10. The method according to any one of claims 7 to 9, wherein when the fiber is an all-solid fiber, the method further comprises:
polishing a ferrule-side facet of the all-solid fiber and plating the ferrule-side facet of the all-solid fiber with an anti-reflection film.

11. A fiber connecting apparatus, comprising a first fiber ferrule, a second fiber ferrule, and a ferrule matching sleeve, wherein
a first fiber is packaged in the first fiber ferrule, and a second fiber is packaged in the second fiber ferrule; and
the ferrule matching sleeve is configured to connect the first fiber ferrule and the second fiber ferrule, to dock the first fiber and the second fiber, and the first fiber ferrule and the second fiber ferrule care capable of rotating in the ferrule matching sleeve by any angle in a circumferential direction, wherein
a head of the first fiber ferrule comprises a first fiber limiting structure, and the first fiber limiting structure is configured to fasten a head of the first fiber in the first fiber ferrule; and/or a head of the second fiber ferrule comprises a second fiber limiting structure, and the second fiber limiting structure is configured to fasten a head of the second fiber in the second fiber ferrule.

12. The fiber connecting apparatus according to claim 11, wherein the first fiber limiting structure and/or the second fiber limiting structure are/is a groove structure in a central axis direction, and the groove structure is configured to accommodate the material having a bonding attribute, to fasten the head of the fiber in the fiber ferrule.

13. The fiber connecting apparatus according to claim 11 or 12, wherein the fiber in the fiber ferrule comprises a microstructure fiber.

14. The fiber connecting apparatus according to any one of claims 11 to 13, wherein when the fiber in the fiber ferrule is an all-solid fiber, a ferrule-side facet of the all-solid fiber is polished and plated with an anti-reflection film.
